# EUROPÄISCHE PATENTANMELDUNG

(11) **EP 1 235 168 A2**
(43) Veröffentlichungstag der Anmeldung: **28.08.2002**
(21) Anmeldenummer: 01125047.9
(22) Anmeldetag: 22.10.2001
(51) Int. Cl.: G06F 17/60

(54) **Verfahren zum Betrieb eines Peripherie-Gerätes an einem Bus eines Computers sowie Peripheriegerät**

(30) Priorität: 23.10.2000 DE 10052458
(71) Anmelder: Elsa AG, 52070 Aachen (DE)
(72) Erfinder: Wieninger, Peter, 52072 Aachen (DE); Bender, Bernhard, 52134 Herzogenrath (DE)
(74) Vertreter: Kohlmann, Kai, Dipl.-Ing.

(57) **Zusammenfassung**

Die Erfindung betrifft ein Verfahren zum Betrieb eines Peripherie-Gerätes an einem Bus eines Computers mit einer Selbstinstallation des Peripheriegerätes. Für die Selbstinstallation überträgt das Peripherie-Gerät eine erste Geräte-Kennung zu dem Computer und emuliert ein durch die erste Geräte-Kennung bestimmtes Standard-Gerät, mit dessen Hilfe eine Treibersoftware für das Peripherie-Gerät an den Computer übertragen und dort installiert wird. Um bei einem Neustart des Computers oder einem erneuten Anschluss des Peripheriegerätes an den Computer eine unnötige Wiederholungen der Selbstinstallation zu vermeiden, wird erfindungsgemäß vorgeschlagen, nach erfolgreicher Installation der Treibersoftware unmittelbar eine zweite Geräte-Kennung an den Computer zu übertragen, über die die nun vorhandene Treibersoftware für das Peripheriegerät angesprochen wird.

## Beschreibung

Die Erfindung betrifft ein Verfahren zum Betrieb eines Peripherie-Gerätes an einem Bus eines Computers, bei dem das Peripherie-Gerät an den Computer angeschlossen und der Computer gestartet wird, von dem Peripherie-Gerät eine erste Geräte-Kennung zu dem Computer übertragen wird, das Peripheriegerät ein durch die erste Geräte-Kennung bestimmtes Gerät emuliert und eine Treibersoftware für das Peripherie-Gerät an den Computer überträgt und dort installiert und sodann eine zweite Geräte-Kennung von dem Peripheriegerät an den Computer übertragen wird. Außerdem betrifft die Erfindung ein Peripherie-gerät zur Durchführung des Verfahrens.

Das erfindungsgemäße Verfahren kommt vorzugsweise dann zur Anwendung, wenn ein Peripheriegerät an einen Computer als steuerndes System angeschlossen wird und die Eigenschaften des Peripheriegerätes sowie die dazugehörige Treibersoftware im Betriebssystem des Rechners nicht oder nur unvollständig bekannt sind.

Peripheriegeräte, insbesondere Geräte zur Ein- und Ausgabe von Daten, werden an modernen Computern an Bussen angeschlossen. Man unterscheidet interne Busse, wie z.B. den PCI- oder AGP-Bus, von externe Bussen, wie z.B. den USB- oder IEEE-1394 Bus. Die Peripheriegeräte werden an internen Bussen meistens als Steckkarten betrieben oder an Konnektoren externer Busse angeschlossen. Schließlich gibt es Busse die sowohl intern als auch extern zum Einsatz kommen, wie z.B. der SCSI-Bus. Insbesondere im Zusammenhang mit dem USB-Bus kommt die Erfindung zum Einsatz, dessen Hauptvorteil in der Vereinheitlichung der Anschlüsse am Computer bestehen. Die meisten USB-Peripheriegeräte sind HOT-PLUG fähig, dass heißt sie dürfen bei eingeschaltetem Computer angeschlossen oder entfernt werden. Der USB Basistreiber informiert das Betriebssystem über neu hinzugekommene Geräte und veranlasst das Laden der gerätespezifischen Treibersoftware.

Die Installation und der Betrieb eines neuen Peripheriegerätes an dem Computer ist unproblematisch, solange alle Eigenschaften des Peripheriegerätes dem laufenden Betriebssystem bekannt sind und die für das Peripheriegerät notwendige Treibersoftware in einem Speicher des Computers gespeichert ist. Es kann auch vorkommen, dass die Treibersoftware lediglich auf dem Datenträger des Betriebssystems gespeichert ist; in diesem Fall muss der Anwender den Datenträger des Betriebssystems einlegen, um zunächst die erforderlichen Dateien in den Rechner zu übertragen, so dass danach die Treibersoftware permanent zur Verfügung steht. In beiden Fällen ist für die Installation und den Betrieb eines neuen Peripheriegerätes keine zusätzlicher Datenträger des Herstellers des Peripheriegerätes erforderlich.

Da Peripheriegeräte häufig erst nach der Entwicklung des Betriebssystem hergestellt werden, kommt es zwangsläufig zu Fällen, in denen bei der Installation eines Peripheriegerätes keine Treibersoftware vom Betriebssystems zur Verfügung gestellt werden kann. Das dem Betriebssystem unbekannte Peripheriegerät übermittelt im Rahmen eines durch die Bus-Architektur festgelegten Verhandlungsschemas eine Gerätekennung, die dem Betriebssystem nicht oder nicht ausreichend bekannt ist. In diesem Fall wird der Anwender üblicherweise aufgefordert, dem Computer einen herstellerspezifischen Datenträger zur Verfügung zu stellen, von dem die Treibersoftware in den Computer übertragen und dort installiert wird.

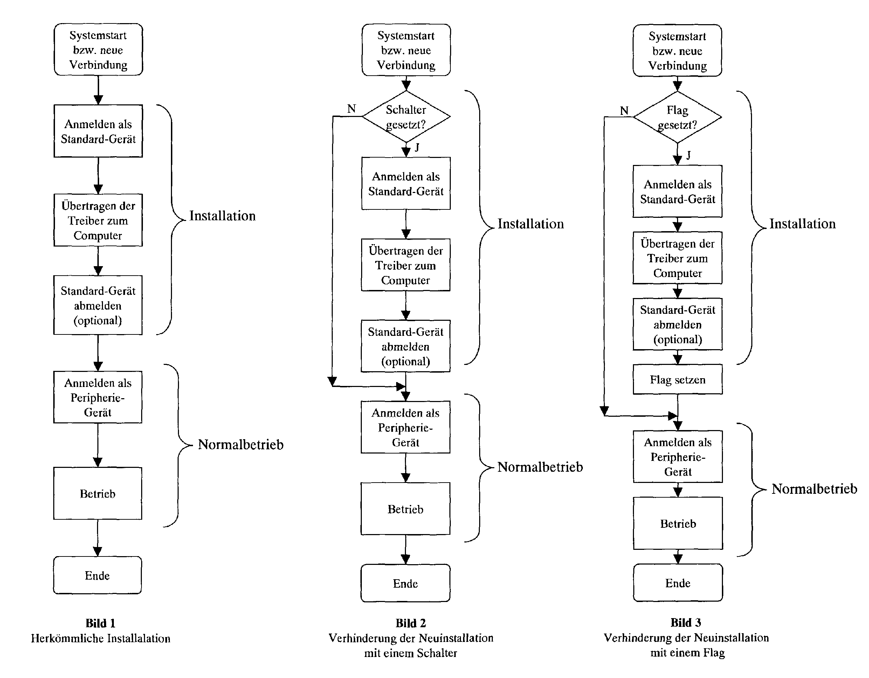

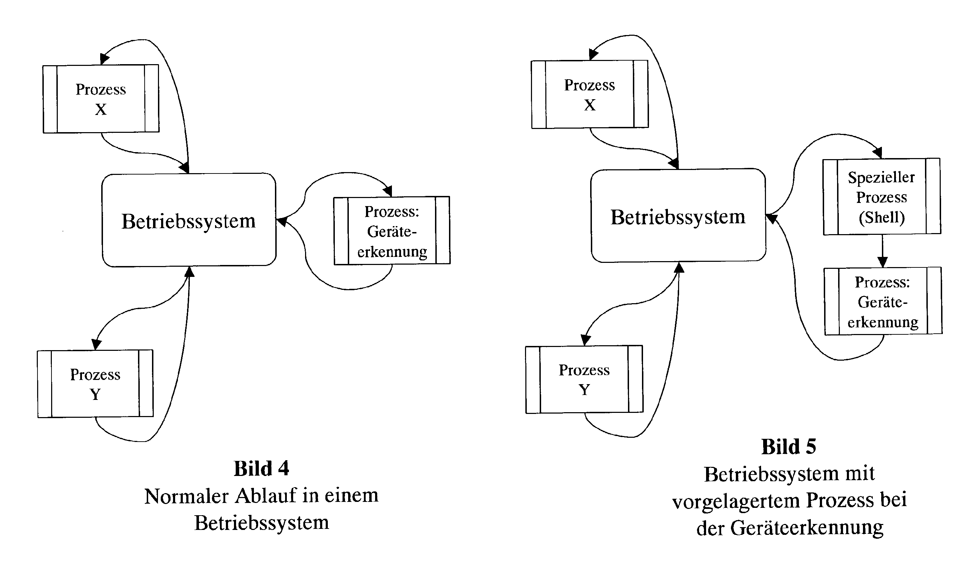

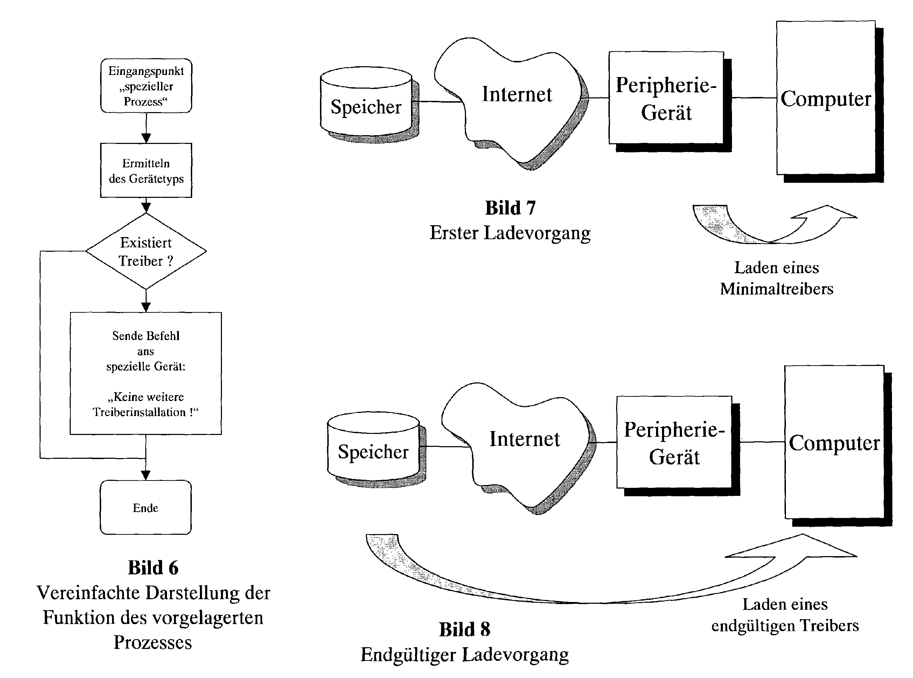

Das Einlegen von herstellerspezifischen Datenträgern zur Installation eines neuen Peripheriegerätes wird von Anwendern mit geringer Computererfahrung häufig als kompliziert empfunden. Die WO 01/07984 A2 beschreibt bereits ein Verfahren, das das Einlegen eines herstellerspezifischen Datenträgers durch eine automatische Selbstinstallation vermeidet. Das Verfahren wird anhand von **Bild 1** veranschaulicht. Zum Betrieb des Peripheriegerätes an dem Bus des Computers wird das Peripheriegerät an den Computer angeschlossen und der Computer gestartet. Von dem Peripheriegerät wird eine erste Geräte-Kennung zu dem Computer übertragen, beispielsweise die Gerätekennung einer Tastatur, eines Datenträgers (Standard-Geräte) oder einer Standard-Geräteklasse, die dem Betriebssystem des Computers bekannt ist und für die das Betriebssystem eine passende Treibersoftware aufweist (Anmeldung als Standard-Gerät). Das Peripheriegerät emuliert das durch die erste Geräte-Kennung bestimmte Gerät, beispielsweise einen Datenträger, und überträgt mittels dessen Funktionalität, beispielweise der autorun-Funktion, die in dem Peripheriegerät gespeicherte Treibersoftware für das Peripherie-Gerät an den Computer (Übertragen der Treiber an zum Computer). Nach Installation der Treibersoftware auf dem Computer meldet sich das Peripherie-gerät mit einer zweiten Geräte-Kennung an den Computer an, für die nun die passende Treibersoftware auf dem Computer gespeichert ist (Anmelden als Peripherie-Gerät). Vor der Anmeldung mit der zweiten Gerätekennung kann sich das Peripherie-gerät abmelden, muss dies jedoch nicht (Standard-Gerät abmelden (optional)).

Das Peripheriegerät nach der WO 01/07984 A2 wird für die beschriebene Betriebsweise mit Selbstinstallation über eine Schnittstelle an den Bus des Computer angeschlossen und besitzt einen Prozessor der so programmiert ist, das Standard-Gerät oder die Standard-Geräteklasse zu emulieren und deren Gerätekennung zu übertragen, die Treibersoftware für das Peripherie-Gerät über den Bus an den Computer zu übertragen während der Prozessor das Standard-Gerät oder eine Standard-Geräteklasse emuliert und das Peripherie-Gerät zu betreiben, nachdem die Treibersoftware übertragen wurde.

Das beschriebene Verfahren zur automatischen Installation hat jedoch den Nachteil, dass bei jedem Neustart des Computers und/oder Verbinden des Peripheriegerätes mit dem Computer die Selbstinstallation zumindest teilweise wiederholt wird. Dies führt zu unnötigen Verzögerungen beim Starten des Computers. Selbst bei unterstellter akzeptabler Dauer der Verzögerungen können die unnötigen Datenübertragungen die Stabilität des Gesamtsystems beeinträchtigen.

Der Erfindung liegt daher die Aufgabe zugrunde, ein Verfahren zum Betrieb eines Peripheriegerätes an einem Bus eines Computers der eingangs erwähnten Art vorzuschlagen, bei dem unnötige Wiederholungen der Selbstinstallation vermieden werden.

Diese Aufgabe wird bei dem Verfahren der eingangs erwähnten Art dadurch gelöst, dass bei einem Neustart des Computers oder einem erneuten Anschluss des Peripheriegerätes an den Computer unmittelbar die zweite Geräte-Kennung übertragen wird. Durch die unterdrückte Übertragung der ersten Geräte-kennung wird die erneute Installation der Treibersoftware unterbunden und die Datenübertragung, insbesondere in der kritischen Startphase des Computers verbessert, indem weniger Daten übertragen werden. Der Computer ist schneller betriebsbereit. Außerdem ist der Startvorgang selbst einfacher und betriebssicherer.

Die für das Peripheriegerät zu installierende Treibersoftware benötigt häufig viel Speicherplatz, der auf dem Peripheriegerät üblicherweise als Festspeicher ausgeführt ist und daher hohe Kosten verursacht. Zur Reduzierung des Speicherbedarfs des Datenspeichers in dem Peripheriegerät wird in einer Ausgestaltung der Erfindung vorgeschlagen, dass die Treibersoftware nur teilweise mittels der Funktionalität des emulierten Gerätes von dem Datenspeicher des Peripheriegerätes auf einen Datenspeicher des Computers übertragen und dort installiert wird. Mittels der teilweise übertragenen Treibersoftware ist das Peripheriegerät zumindest in der Lage, auf einen externen Speicher, insbesondere eine entfernte Datenquelle (Speicher) zuzugreifen. Der Zugriff kann beispielsweise auf einen FTP-Server im Internet erfolgen, von dem die übrigen Dateien der Treibersoftware über das Internet in den Speicher des Computers geladen und dort installiert werden, um den vollen Funktionsumfang der Treibersoftware herzustellen.

Alternativ ist es möglich, lediglich eine temporär wirksame Treibersoftware (Minimaltreiber) aus dem Datenspeicher des Peripheriegerätes in den Computer zu übertragen, die vollständig durch die aus dem externen Speicher zu ladende Treibersoftware (endgültiger Treiber) für das Peripheriegerät ersetzt wird. Die temporär wirksame Treibersoftware (Minimaltreiber) muss sicherstellen, dass das Peripheriegerät oder der Computer mit Hilfe des Peripheriegerätes zumindest in der Lage ist, die endgültige Treibersoftware vollständig von einem externen, entfernten Speicher, beispielsweise über das Internet, zu laden **(Bilder 7, 8).** Ein weiterer Vorteil besteht darin, dass die Dateien der Treibersoftware in dem entfernten Speicher von einem Administrator, insbesondere durch den Hersteller des Peripheriegerätes selbst aktualisiert werden können.

In einer Ausgestaltung der Erfindung wird nach der vollständigen Installation der Treibersoftware ein Schalter an dem Peripheriegerät insbesondere manuell betätigt, der die Übermittlung der ersten Geräte-Kennung und Übertragung der Treibersoftware verhindert. Der Schalter wird bei jedem Start des Peripheriegerätes abgefragt (**Bild 2**). Die Emulation eines Standard-Gerätes oder einer Standard-Geräteklasse erfolgt nur, wenn der Schalter in der entsprechenden Schaltposition für eine Neuinstallation ist (Schalter gesetzt ? = J). Andernfalls überträgt das Peripheriegerät unmittelbar die zweite Geräte-Kennung über die die Treibersoftware für das Peripheriegerät angesprochen wird (Schalter gesetzt ? = N).

Alternativ oder zusätzlich ist im Peripherie-Gerät mindestens eine nichtflüchtige Speicherzelle vorhanden, deren Zustand nach der vollständigen Installation der Treibersoftware beispielsweise mittels eines Flags so verändert wird, dass die Übermittlung der ersten Geräte-Kennung und Übertragung der Treibersoftware verhindert wird. Die nichtflüchtige Speicherzelle kann beispielsweise ein Flash-Speicher oder ein CMOS-Speicher sein. Der Zustand in dieser Speicherzelle bestimmt das Verhalten des Peripheriegerätes beim Neustart des Computers oder bei dessen erneuten Anschluss an den Computer. Wenn das Flag gesetzt ist , soll eine Erstinstallation erfolgen (Flag gesetzt ? = J); dann überträgt das Peripheriegerät eine erste Geräte-Kennung an den Computer und es emuliert mittels des auf dem Computer hiefür vorhandenen Treibers ein Standard-Gerät (Anmelden Standard-Gerät). Nach erfolgreicher Übertragung und Installation der Treibersoftware für das Peripheriegerät an den Computer wird das Flag so gesetzt (Flag setzen), dass keine weitere Übertragung und Installation der Treibersoftware mehr erfolgt. Bei einem späteren Neustart des Computers oder einem erneuten Anschluss des Peripheriegerätes wird dieses Flag ausgelesen (Abfrage Flag gesetzt = N).; das Gerät meldet sich sofort mit der zweiten Geräte-Kennung für das Peripherie-Gerät an, zu er nun eine passende Treibersoftware im Computer registriert ist (Anmelden als Peripheriegerät) (**Bild 3**).

In vorteilhafter Ausgestaltung der Erfindung ist das Flag rücksetzbar, das heißt, es kann erneut gesetzt werden, um eine neue Installation des Peripheriegerätes, beispielsweise an einem anderen Computer (Host) zu erzwingen. Das Rücksetzen kann beispielsweise über einen Befehl in der Treibersoftware erfolgen.

Eine weitere Möglichkeit eine erneute vollständige Installation der Treibersoftware zu verhindern besteht darin, dass nach vollständiger Installation der Treibersoftware ein Programm auf dem Computer aktiviert wird, das bei Übertragung der ersten Gerätekennung von dem Peripherie-Gerät eine erneute Installation der Treibersoftware zumindest teilweise unterbindet und die Anmeldung des Peripheriegerätes mit der zweiten Gerätekennung auslöst. Um die vom Peripherie-Gerät übertragenen Geräte-Kennungen umzuleiten, kann das Programm den Programmlauf des Betriebssystems beispielsweise so ändern, dass nicht mehr unmittelbar der normale Geräteerkennungs-Prozess aufgerufen wird, sondern stattdessen ein spezieller Prozess zum Ablauf gebracht wird (**Bild 6**). Dieser spezielle Prozess ruft den im Betriebssystem verankerten Geräteerkennungs-Prozess auf, sobald seine Programmroutinen abgearbeitet sind. Die hier vorgeschlagene Technik wird in der Fachliteratur häufig als "Bildung einer Shell" bezeichnet und hat den Vorteil, dass die Abläufe aus "Sicht des Betriebssystems" vollkommen transparent sind.
Die Prozesse X und Y in den Bildern 4 und 5 sind beliebige andere Prozesse und verdeutlichen, dass ein modernes Betriebssystem viele Prozesse praktisch gleichzeitig verwalten kann, einschließlich des speziellen Prozesses.

Das aktivierte Programm auf dem Computer ist in der Lage zu erkennen, wenn die übertragene erste Geräte-Kennung für ein Standard-Gerät oder eine Standard-Geräteklasse von dem zwischenzeitlich installierten Peripherie-Gerät stammt. In diesem Fall kann das Programm veranlassen, das über den Bus an das Peripherie-Gerät besondere Sequenzen übertragen werden, die beispielsweise zu einem Abbruch der durch die Geräte-Kennung eingeleiteten Übertragung der Treibersoftware oder einer Rücknahme der Geräte-Kennungs-Übertragung führen (**Bild 6**, Sende Befehl: "Keine weitere Treiberinstallation"). Alle Übertragungen von Gerätekennungen für Standard-Geräte bzw. -Geräte-Klassen die nicht von dem Peripheriegerät stammen, werden von dem Programm weitergeleitet und damit nicht gestört (**Bild 6**, "Existiert Treiber?").

## Patentansprüche

1. Verfahren zum Betrieb eines Peripherie-Gerätes an einem Bus eines Computers, bei dem
- das Peripherie-Gerät an den Computer angeschlossen und der Computer gestartet wird,
- von dem Peripherie-Gerät eine erste Geräte-Kennung zu dem Computer übertragen wird,
- das Peripheriegerät ein durch die erste Geräte-Kennung bestimmtes Gerät emuliert, mit Hilfe des emulierten Gerätes eine Treibersoftware für das Peripherie-Gerät an den Computer übertragen und dort installiert wird und sodann eine zweite Geräte-Kennung von dem Peripheriegerät an den Computer übertragen wird, **dadurch gekennzeichnet , dass** bei einem Neustart des Computers oder einem erneuten Anschluss des Peripheriegerätes an den Computer unmittelbar die zweite Geräte-Kennung übertragen wird.

2. Verfahren nach Anspruch 1, **dadurch gekennzeichnet, dass** die Treibersoftware zumindest teilweise von einem Datenspeicher des Peripheriegerätes auf einen Datenspeicher des Computers übertragen wird.

3. Verfahren nach Anspruch loder 2, **dadurch gekennzeichnet, dass** die Treibersoftware zumindest teilweise von einem externen Datenspeicher auf einen Datenspeicher des Computers übertragen wird.

4. Verfahren nach einem der Ansprüche 1 bis 3, **dadurch gekennzeichnet, dass** nach der vollständigen Installation der Treibersoftware ein Schalter an dem Peripheriegerät betätigt wird, der die Übermittlung der ersten Geräte-Kennung und Übertragung der Treibersoftware verhindert.

5. Verfahren nach einem der Ansprüche 1 bis 4, **dadurch gekennzeichnet, dass** im Peripherie-Gerät mindestens eine nichtflüchtige Speicherzelle vorhanden ist, deren Wert nach der vollständigen Installation der Treibersoftware über den Bus so verändert wird, dass die Übermittlung der ersten Geräte-Kennung und Übertragung der Treibersoftware verhindert wird.

6. Verfahren nach Anspruch 5, **dadurch gekennzeichnet, dass** der Wert der Speicherzelle rücksetzbar ist, so dass erneut die erste Geräte-Kennung zu dem Computer übertragen wird, das Peripheriegerät ein durch die erste Geräte-Kennung bestimmtes Gerät emuliert und eine Treibersoftware für das Peripherie-Gerät an den Computer zumindest teilweise überträgt und dort installiert.

7. Verfahren nach einem der Ansprüche 1 bis 6, **dadurch gekennzeichnet, dass** nach vollständiger Installation der Treibersoftware ein Programm auf dem Computer aktiviert wird, das bei Übertragung der ersten Gerätekennung von dem Peripherie-Gerät eine erneute Installation der Treibersoftware zumindest teilweise unterbindet und die Anmeldung des Peripheriegerätes mit der zweiten Geräte-kennung auslöst.

8. Verfahren nach Anspruch 7, **dadurch gekennzeichnet, dass** die Anmeldung des Peripheriegerätes mit der zweiten Gerätekennung ausgelöst wird, in dem das Programm dem Peripherie-Gerät über den Bus eine Befehlssequenz übermittelt

9. Verfahren nach Anspruch 7 oder 8, **dadurch gekennzeichnet, dass** das Programm Übertragungen von Gerätekennungen weiterer Peripherie-Geräte zum originalen Programmpfad weiterleitet.

10. Peripheriegerät zum Durchführen des Verfahrens nach einem oder mehreren der Ansprüche 1 bis 9, mit einer Schnittstelle zum Anschluss des Peripheriegerätes an einen Bus eines Computers, einem Prozessor der so programmiert ist, ein Standard-Gerät oder eine Standard-Geräteklasse zu emulieren und deren Gerätekennung zu übertragen, eine Treibersoftware für das Peripherie-Gerät an den Computer zu übertragen während der Prozessor das Standard-Gerät oder eine Standard-Geräteklasse emuliert und das Peripherie-Gerät zu betreiben, nachdem die Treibersoftware übertragen wurde, **dadurch gekennzeichnet, dass** an dem Peripheriegerät ein Schalter angeordnet ist, der zumindest die Übermittlung der Gerätekennung des Standard-Gerätes oder der Standard-Geräteklasse und die Übertragung der Treibersoftware verhindert.

11. Peripheriegerät zum Durchführen des Verfahrens nach einem oder mehreren der Ansprüche 1 bis9, mit einer Schnittstelle zum Anschluss des Peripheriegerätes an einen Bus eines Computers, einem Prozessor der so programmiert ist, ein Standard-Gerät oder eine Standard-Geräteklasse zu emulieren und deren Gerätekennung zu übertragen, eine Treibersoftware für das Peripherie-Gerät über den Bus an den Computer zu übertragen während der Prozessor das Standard-Gerät oder eine Standard-Geräteklasse emuliert und das Peripherie-Gerät zu betreiben, nachdem die Treibersoftware übertragen wurde, **dadurch gekennzeichnet, dass** im Peripherie-Gerät mindestens eine nichtflüchtige Speicherzelle vorhanden ist, deren Wert nach der vollständigen Installation der Treibersoftware über den Bus so verändert wird, dass die Übermittlung der Geräte-kennung des Standard-Gerätes oder der Standard-Geräteklasse und Übertragung der Treibersoftware verhindert wird.

12. Peripheriegerät nach Anspruch 11, **dadurch gekennzeichnet, dass** der Wert der Speicherzelle rücksetzbar ist.

13. Peripheriegerät nach einem der Ansprüche 10 bis 12, **dadurch gekennzeichnet, dass** das Peripheriegerät ein Datenübertragungsgerät für Netzwerke ist.
